# EUROPEAN PATENT SPECIFICATION

(11) **EP 3 496 534 B1**
(45) Date of publication and mention of the grant of the patent: **06.10.2021**
(21) Application number: 17751701.8
(22) Date of filing: 03.08.2017
(51) Int. Cl.: A01P 1/00, A01N 31/02, A01N 37/02, A01N 37/06, A01N 37/10, A61L 2/18

(54) **LIQUID CONCENTRATE FOR PRESERVATION**
FLÜSSIGES KONZENTRAT ZUR KONSERVIERUNG
CONCENTRÉ LIQUIDE POUR LA CONSERVATION

(30) Priority: 15.08.2016 DE 102016115082
(43) Date of publication of application: 19.06.2019
(73) Proprietor: Ashland Industries Europe GmbH, 8200 Schaffhausen (CH)
(72) Inventor: BEILFUSS, Wolfgang, 22339 HAMBURG (DE); GRADTKE, Ralf, 25436 TORNESCH (DE); SAKULOWSKI, Stefan, 22083 Hamburg (DE); WEBER, Klaus, 20146 HAMBURG (DE)
(74) Representative: LKGLOBAL Lorenz & Kopf PartG mbB Patentanwälte
(86) International application number: PCT/EP2017/069722
(87) International publication number: WO 2018/033406

(56) References cited:
- US-A1- 2004 208 782
- US-A1- 2005 222 276
- US-A1- 2015 017 218
- US-B1- 7 537 776

## Description

The invention relates to an antimicrobial liquid concentrate and the use of said liquid concentrate for preservation, particularly of wet wipes.

Preservatives based on carboxylic acids such as benzoic acid, sorbic acid, dehydroacetic acid, undecylenic acid, or salts thereof are known. Although such acids and salts are toxicologically safe, they are not sufficiently effective when used alone. The cosmetic industry therefore continues to seek improved preservatives based on organic acids.

DE 19922538 A1 describes a liquid concentrate comprising:
a) carboxylic acids,
b) aromatic alcohols, and
c) solvents,
wherein the total content of components a) and b) is greater than 45 wt%.

However, the use of aromatic alcohols in preservatives for cosmetics is increasingly being criticized.

DE 4026756 A1 discloses a preservative comprising:
a) 5 to 60 wt% of an organic acid selected from benzoic acid, 4-hydroxybenzoic acid, salicylic acid, formic acid, acetic acid, propionic acid, sorbic acid, undecylenic acid, and/or dehydroacetic acid and salts thereof,
b) 10 to 95 wt% of aromatic alcohols, and c) 0.1 to 20 wt% of poly(hexamethylenebiguanide) salts.

In addition, d) 0.1 to 20 wt% of substituted glycerol ethers can also be included.

In order to improve low-temperature stability, solvents such as water, glycols such as propylene glycol, dipropylene glycol, and triethyleneglycol, or glycol ethers such as butyl diglycol can also be included.

Another known product is euxyl® K 702, produced by Schülke & Mayr GmbH (Norderstedt, Federal Republic of Germany), which comprises benzoic acid, poly(hexamethylene biguanide) hydrochloride, dehydroacetic acid, and phenoxyethanol. However, the use of cationic surfactants (such as poly(hexamethylene biguanide) salts), particularly in large amounts such as 1wt%, in anionic surfactant-based products such as shampoos is problematic, because this can result in interactions causing the formation of precipitates or deactivation.

In addition, according to EU Regulation 944/2013, poly(hexamethylene biguanide) salts have been classified since 2015 as a CMR2 substance, so they are no longer allowed as components in cosmetics.

DE 10122380 A1 discloses an alcohol-free liquid concentrate, for example for the preservation of cosmetics, which comprises a carboxylic acid component (A), a stabilizer component (B), and solvents (C). The carboxylic acid component (A) comprises at least one salt of benzoic acid, propionic acid, salicylic acid, sorbic acid, 4-hydroxybenzoic acid, dehydroacetic acid, or 10-undecylenic acid, and optionally one or a plurality of the above-mentioned free acids. Illustrative concentrates described in said document contain, in addition to approximately 45 wt% of a mixture of sodium benzoate with potassium sorbate, formaldehyde or a formaldehyde depot compound (such as dimethylol dimethyl hydantoin). However, there is increasing criticism of cosmetic preservatives containing formaldehyde or formaldehyde depot compounds.

WO 2012/151441 A1 describes antimicrobial formulations composed of:
a) a fatty acid and
b) at least one of:
   i) a natural product or product of natural origin,
   ii) an alcohol-containing solvent, or
   iii) an organic acid or salt thereof.

An example of component b)i) is 1,3-propanediol, and examples of component b)iii) are potassium sorbate and benzoic acid.

A mixture described in WO2012/151441 A1 is anhydrous and comprises approximately 80% 1,3-propanediol, approximately 10% ethyl hexyl glycerol, and approximately 10% potassium sorbate.

The preservatives according to WO2012/151441 A1 are used in skin care products such as shampoos, lotions, conditioners, and soaps.

However, it has been found that compositions containing e.g. potassium sorbate and sodium benzoate cannot be formulated as clear solutions if the content of sorbate and benzoate is higher and the content of 1,3-propanediol is lower. Although 1,3-propanediol alone is readily soluble in water, it is not possible to prepare a clear solution from 45wt% of water, 15wt% of potassium sorbate, and 30wt% of sodium benzoate with 10wt% of 1,3-propanediol. Moreover, the formulations according to WO2012/151441 A1 act as thickeners, which is a drawback in use for the preservation of wet wipes.

WO 2014/191258 A2 discloses that an antimicrobial action can be imparted to products by using combinations of:
a) aryl or alkyl glycerol ethers and
b) further antimicrobial agents.

WO 2014/135650 A1 describes a method for imparting an antimicrobial action to products by using combinations of acetophenone derivatives with further antimicrobial agents.

EP 2606725 A1 relates to 3-methylbut-1-(or 2, or 3)-en-1-yl derivatives of phenol, optionally in combination with further preservative active ingredients.

Accordingly, the object of the present invention is to provide preservatives as concentrates that can easily be formulated into clear solutions, even in an aqueous dilution. The compositions should also be single-phase concentrates so that they can be favorably dosed, specifically without requiring one of the components to be present in a large amount for this purpose (as is the case according to WO2012/151441 A1 for 1,3-propanediol).

Moreover, the preservative should have little or no effect on the properties of the final product and therefore need not necessarily contain surfactants, emulsifiers, or solvents. The object of the invention is also to provide liquid concentrates based on carboxylic acid salts that need not necessarily contain aromatic alcohols.

In a first aspect, the invention therefore relates to an antimicrobial liquid concentrate, which comprises:
**a)** - From 5 weight% to 20 weight% of one or a plurality of diols selected from alkanediols having from six to twenty carbon atoms, and monoalkyl glycerol ethers having from four to eighteen carbon atoms;
**b)** - From 20 weight% to 60 weight% of one or a plurality of salts of one or a plurality of organic acids selected from the group composed of sorbic acid, benzoic acid, anisic acid, salicylic acid, 4-hydroxy benzoic acid, cinnamic acid, succinic acid, and levulinic acid, and optionally one or a plurality of the above-mentioned free acids, and,
**c)** - From 30 weight% to 70 weight% of water,
wherein the content of aromatic alcohol is a maximum of 5 weight% relative to the weight of the liquid concentrate.

Among other factors, the invention is based on the surprising finding that aqueous antimicrobial liquid concentrates can be formulated with a content of longer-chain diols, although these diols *per se* are quite sparingly soluble in water, specifically by adding carboxylic acid salts. It is also advantageous that aqueous dilutions of the antimicrobial liquid concentrates have low surface tension, without requiring organic solvents or surfactants that are not needed for antimicrobial efficacy to be present. It was also surprising that in the concentrates according to the invention, the diols act as boosters for the microbiologically active carboxylic acid salts. A further advantage is the improved skin compatibility (reduced stinging effect) because of the lower acid content. It is also advantageous that no carboxylic acid esters form in the concentrates according to the invention, as is known to occur in the case of acids mixed with alcohols at pH 7 (ester equilibrium). A further advantage of the invention is that the liquid concentrate can be formulated as a clear (i.e. homogeneous) and water-based solution and is stable when stored.

It was also surprising that according to the invention, the presence of aromatic alcohols, such as those absolutely required in DE 4026756 A1, for example, is not necessary.

### a) - Diols

The liquid concentrate according to the invention comprises from 5 weight% (wt%) to 20 wt% of one or a plurality of diols selected from alkanediols having from six to twenty carbon atoms (C₆ to C₂₀ alkanediols) and monoalkyl glycerol ethers having from four to eighteen carbon atoms (C₄ to C₁₈ monoalkyl glycerol ethers).

### a₁) - Alkanediols

If the liquid concentrate according to the invention comprises a C₆ to C₂₀ alkanediol, said alkanediol is mainly a C₆ to C₂₀ 1,2-alkanediol.

Said alkanediol has more particularly eight to twelve carbon atoms (C₈ to C₁₂ alkanediol).

According to a preferred embodiment, if the liquid concentrate according to the invention comprises a C₆ to C₂₀ alkanediol, said alkanediol is a C₈ to C₁₂ 1,2-alkanediol, such as 1,2-octanediol or 1,2-decanediol.

### a₂) Glycerol ethers

If the liquid concentrate according to the invention comprises a C₄ to C₁₈ monoalkyl-glycerol ether, said monoalkyl glycerol ether is mainly 1-(alkyl) glycerol ether,

Said monoalkyl glycerol ether has more particularly nine to thirteen carbon atoms.

According to a preferred embodiment, if the liquid concentrate according to the invention comprises a C₄ to C₁₈ monoalkyl-glycerol ether, said monoalkyl-glycerol ether Is the 1-(2-ethyl hexyl) glycerol ether or the 1-dodecyl glycerol ether.

According to a preferred embodiment, the liquid concentrate as hereinbefore defined, comprises:
**a)** - From 5 wt% to 20 wt% of 1-(2-ethylhexyl) glycerol ether, 1,2-octanediol, or a mixture thereof;
**b)** - From 20 weight% to 60 weight% of one or a plurality of salts of one or a plurality of organic acids selected from the group composed of sorbic acid, benzoic acid, anisic acid, salicylic acid, 4-hydroxy benzoic acid, cinnamic acid, succinic acid, and levulinic acid, and optionally one or a plurality of the above-mentioned free acids, and,
**c)** - From 30 weight% to 70 weight% of water,
wherein the content of aromatic alcohol is a maximum of 5 weight% relative to the weight of the liquid concentrate.

In the mixture of 1-(2-ethyl hexyl) glycerol ether with 1,2-octanediol, the weight ratio 1-(2-ethylhexyl)-glycerol ether/1,2-octanediol is preferably in the range of 10/1 to 1/10, and more preferably 5/1 to 1/1, for example approximately 3:7.

The amount of component a) is more particularly from 5 wt% to 15 wt%, for example from 8 wt% to 12 wt%, such as approximately 10 wt%.

### b) - Carboxylic acid salts (and optionally, free carboxylic acids)

The liquid concentrates according to the invention further comprises from 20 wt% to 60 wt% of one or a plurality of salts of one or a plurality of organic acids selected from the group composed of sorbic acid, benzoic acid, anisic acid, salicylic acid, 4-hydroxybenzoic acid, cinnamic acid, succinic acid, and levulinic acid, and optionally one or a plurality of the above-mentioned free acids. In the liquid concentrate according to the invention, the carboxylic acid acts as a solubilizer for the diol, which is only water-soluble to a limited degree.

According to a preferred embodiment, the one or a plurality of salts of one or a plurality of organic acids is selected from the one or a plurality of salts of sorbic acid or of benzoic acid or of a mixture thereof and if the free acid is present said free acid is sorbic acid, benzoic acid or a mixture thereof.

According to a preferred embodiment, the one or a plurality of salts is the sodium salt or the potassium salt or a mixture thereof.

According to a preferred embodiment, the liquid concentrate as hereinbefore defined, comprises:
**a)** - From 5 weight% to 20 weight% of one or a plurality of diols selected from alkanediols having from six to twenty carbon atoms, and monoalkyl glycerol ethers having from four to eighteen carbon atoms;
**b)** - From 20 weight% to 60 weight% of potassium salt or sodium salt of benzoic acid or of sorbic acid or of a mixture thereof, and optionally one or a plurality of the above-mentioned free acids, and,
**c)** - From 30 weight% to 70 weight% of water,
wherein the content of aromatic alcohol is a maximum of 5 weight% relative to the weight of the liquid concentrate.

According to this embodiment, the component b) is preferably potassium sorbate, sodium benzoate, or a mixture of potassium sorbate with sodium benzoate.

The amount of component b) is more particularly from 30 wt% to 55 wt%, for example from 35 wt% to 50 wt%, e.g. such as approximately 45 wt%.

According to another preferred embodiment, the liquid concentrate as hereinbefore defined, comprises:
**a)** - From 5 wt% to 20 wt% of 1-(2-ethylhexyl) glycerol ether, 1,2-octanediol, or a mixture thereof;
**b)** - From 20 weight% to 60 weight% of potassium sorbate, of sodium benzoate, or of a mixture of potassium sorbate with sodium benzoate, and optionally one or a plurality of the above-mentioned free acids, and,
**c)** - From 30 weight% to 70 weight% of water,
wherein the content of aromatic alcohol is a maximum of 5 weight% relative to the weight of the liquid concentrate.

### c) - Water

The liquid concentrates according to the invention further comprises from 30 wt% to 70 wt% of water. An advantageous liquid concentrate according to the invention comprises from 35 wt% to 60 wt% of water, particularly 35 to 55 wt% or 35 to 50 wt% of water, such as approximately 45 wt% of water.

### Aromatic alcohols

The liquid concentrate according to the invention does not comprises more than 5 weight%, relative to the weight of the liquid concentrate, of aromatic alcohol.

Although, the total content of the aromatic alcohols, such as i) an aryl alkanol (such as benzylic alcohol or phenethylalcohol) and ii) an aryloxy alkanol (such as phenoxyethanol), is used for example in the amount of 15 wt% to 75 wt% according to DE 4026756 A1 to obtain a clear solution, it was surprisingly found that, the liquid concentrate according to the present invention is clear, in spite of the low amount of said aromatic alcohols.

The total content of aromatic alcohol is preferably a maximum of 4 wt%, more preferably a maximum of 3 wt%, and particularly preferably a maximum of 2 wt%, such as a maximum of 1 wt%, in each case relative to the weight of the liquid concentrate.

Particularly preferably, the liquid concentrate according to the invention is free of aromatic alcohols.

In addition, it is preferred, because of the low water solubility of 1,3-propanediol in the mixture with carboxylic acid salts used according to the invention (see Table 3 below), that the liquid concentrate according to the invention comprises less than 30 wt% of 1,3-propanediol, preferably less than 20 wt% of 1,3-propanediol, and particularly preferably less than 10 wt% of 1,3-propanediol, such as less than 5 wt% of 1,3-propanediol or less than 2 wt% of 1,3-propanediol, wherein the liquid concentrate preferably comprises less than 1 wt% of 1,3-propanediol. It is particularly preferable that the liquid concentrate according to the invention is free of 1,3-propanediol.

It is also preferred that the liquid concentrate according to the invention comprises a maximum of a small amount of a short-chain diol, for example less than 20 wt% of a C₂ to C₅ diol, preferably less than 10 wt% of a C₂ to C₅ diol, and particularly preferably less than 5 wt% of a C₂ to C₅ diol, such as less than 2 wt% of a C₂ to C₅ diol or less than 1 wt% of a C₂ to C₅ diol. It is particularly preferable that the liquid concentrate according to the invention is free C₂ to C₅ diols.

According to a very particular embodiment, the liquid concentrate as hereinbefore defined, consists of:
**a)** - From 5 wt% to 15 wt% of 1-(2-ethylhexyl) glycerol ether, 1,2-octanediol, or a mixture thereof wherein the weight ratio 1-(2-ethylhexyl)-glycerol ether/1,2-octanediol is from 5/1 to 1/1;
**b)** - From 35 weight% to 50 weight% of a mixture of potassium sorbate with sodium benzoate and,
**c)** - From 35 weight% to 50 weight% of water,

in which the sum of the weight proportions of components a) b) and c) is equal to 100 wt%

In a second aspect, the invention relates to the use of the liquid concentrate for preservation of cosmetic products, household products, and technical products. Liquid concentrates according to the invention are suitable for the preservation of leave-on and rinse-off products. The cosmetic product is preferably a wet wipe.

The advantages of the present invention can be seen in particular in the following examples. Unless otherwise indicated, all percent values refer to percent by weight. All weights also refer to parts by weight.

### EXAMPLE 1: Method for determining the preservative effect of chemical preservatives in cosmetic formulations

In the following examples, unless otherwise indicated, the water used was fully demineralized water.

The test described below is used to evaluate the preservative action of chemical preservatives in cosmetic formulations.

### Principle

Using the method described, the efficacity of chemical preservatives with respect to preservation of cosmetic formulations in the container is to be tested. For this purpose, in various test batches, the preservatives to be tested are added to the unpreserved samples to be tested. A continuous bacterial load is provided by periodic inoculation of the test batches. Parallel to this inoculation, respective smears of the individual batches are carried out immediately prior to said inoculation. Assessment is carried out on the microbial growth of the smears. The longer the period until the first occurrence of microbial growth, the more effective a preservative is.

### Method

25g of each of the cosmetics to be tested was weighed into wide neck flasks with screw caps (LDPE). The preservatives to be tested are added in their application concentrations in separate batches. An unpreserved sample is used as a growth control in each case. Two days after addition of the preservatives, the samples are infected with 0.1 ml of an inoculum solution composed of the test organisms listed below. The inoculum solution has a titer of approximately 10⁸-10⁹ cells/ml.

| | | | | |
|---|---|---|---|---|
| **Bacteria** | Gram-positive | | *Staphylococcus aureus* | ATCC6538 |
| | | | *Kocuria rhizophila* | ATCC9341 |
| | Gram-negative | Enterobacteria | *Enterobacter gergoviae* | ATCC33028 |
| | | | *Escherichia coli* | ATCC11229 |
| | | | *Klebsiella pneumoniae* | ATCC4352 |
| | | Pseudomonas | *Pseudomonas aeruginosa* | ATCC9027 |
| | | | *Pseudomonas fluorescens* | ATCC17397 |
| | | | *Pseudomonas putida* | ATCC12633 |
| **Yeast** | | | *Candida albicans* | ATCC10231 |
| **Moulds** | | | *Aspergillus brasiliensis* | ATCC16404 |
| | | | *Penicillium pinophilum* | ATCC36839 |

The test batches are subsequently inoculated weekly, and smeared onto agar plates once a week (casein peptone-soy flour peptone agar (CSA) for bacteria and Sabouraud-dextrose agar (SA) for yeasts and moulds), wherein the first smear (sterility test) takes place on both disinhibited (TLSH) and non-disinhibited culture media in order to reveal any initial contamination to the extent possible. Assessment of microbial growth of the smears is carried out after three-day incubation at 25°C. As a precaution, negative smears are observed for an additional two days and reassessed. Assessment of the preservative effect of the individual product concentrations is carried out by the semiquantitative method based on the growth of the individual smears.

| | | | | | |
|---|---|---|---|---|---|
| - | = | Growth-free | ++ | = | Moderate growth |
| + | = | Weak growth | +++ | = | Strong growth |

Growth is differentiated for bacteria, yeasts and moulds ("B" = bacteria, "Y" = yeasts, "M" = moulds, "Sp" = spore-forming bacteria, "/" = test discontinued). The test is carried out for a maximum of three weeks, i.e. over three inoculation cycles, or discontinued after multiple findings of strong growth (+++).

### Assessment of results

The sample is well-preserved if it lasts under the above laboratory conditions for a period of three weeks without any bacterial growth being seen in the sample batches, i.e., if no microbial growth is detectable after the third inoculation.

### 1. Solubility of mixture A

An aqueous mixture (A) of carboxylic acid salts was produced (Table 1):

**Table 1**

| Components of the mixture (A) | |
|---|---|
| Water | 45.0g |
| Potassium sorbate | 15.0g |
| Sodium benzoate | 30.0g |
| Total | 90.0g |

The mixture A does not dissolve into a clear solution.

### 2. Solubility of diols

The solubility of various diols in fully demineralized water is shown in Table 2:

**Table 2**

| **Diol** | **Solubility** |
|---|---|
| 1-(2-ethyl hexyl) glycerol ether | 0.1% |
| 1,2-octanediol | 0.7% |
| Mixture of 1-(2-ethyl hexyl) glycerol ether with 1,2-octanediol (weight ratio 3:7) | 0.1% |
| 1,2-dodecanediol | < 0.1% |
| 1,2-hexanediol | Unlimited |
| 1,3-propanediol | Unlimited |
| 1-dodecyl glycerol ether | < 0.1% |

### 3. Solubility of mixture A + diols

10g of each of the following substances was added to 90g of mixture A to obtain solutions (Table 3).

**Table 3**

| **Substance** | |
|---|---|
| Water | clear solution |
| 1-(2-ethyl hexyl) glycerol ether | clear solution |
| 1,2-octanediol | clear solution |
| Mixture of 1-(2-ethyl hexyl) glycerol ether with 1,2-octanediol (weight ratio: 3/7) | clear solution |
| 1,2-dodecanediol | clear solution |
| 1,2-hexanediol | clear solution |
| 1,3-propanediol | no clear solution |
| 1-dodecyl glycerol ether | clear solution |

This proves, that a combination of 30 parts by weight of sodium benzoate, 15 parts by weight of potassium sorbate, and 45 parts by weight of water is suitable as a solubilizer for medium-chain diols. For example, it was also possible with 90 parts of this mixture to dissolve 10 parts of highly insoluble 1,2-dodecanediol in a solution. On the contrary, 10 parts of the short-chain diol 1,3-propane in 90 parts of this mixture did not yield a homogenous, clear solution.

### 4. Solubility of various carboxylic acid salts + diols

Various carboxylic acid salts were mixed with diols in order to test whether homogenous concentrates could be obtained:

### 4a) Potassium formate + diols

In example 4a, 10g of 1-(2-ethyl hexyl) glycerol ether or of 1,2-octanediol was added to an aqueous potassium formate solution (Table 4a):

**Table 4a**

| | Parts | Parts |
|---|---|---|
| Potassium formate | 45.0 | 45.0 |
| Fully demineralized water | 45.0 | 45.0 |
| 1-(2-ethyl hexyl) glycerol ether | 10.0 | |
| 1,2-octanediol | | 10.0 |
| Appearance after stirring for 3 h | not dissolved, 2 phases | not dissolved, 2 phases |

While a combination composed of 30 parts by weight of sodium benzoate, 15 parts by weight of potassium sorbate, and 45 parts by weight of water as a solubilizer is thus suitable for medium-chain diols (example 3), a combination of 45 parts by weight of potassium formate and 45 parts by weight of water can dissolve neither 10 parts of 1-(2-ethyl hexyl) glycerol ether nor 10 parts of 1,2-octanediol.

### 4b) Sodium propionate + diols

In example 4b, 10g of 1-(2-ethyl hexyl) glycerol ether or of 1,2-octanediol, was added to an aqueous sodium propionate solution (Table 4b):

**Table 4b**

| | Parts | Parts |
|---|---|---|
| Sodium propionate | 30.0 | 30.0 |
| Fully demineralized water | 60.0 | 60.0 |
| 1-(2-ethyl hexyl) glycerol ether | 10.0 | |
| 1,2-octanediol | | 10.0 |
| Appearance after stirring for 3 h | not dissolved, 2 phases | not dissolved, 2 phases |

While a combination composed of 30 parts by weight of sodium benzoate, 15 parts by weight of potassium sorbate, and 45 parts by weight of water is thus suitable as a solubilizer for medium-chain diols (example 3), a combination of 30 parts by weight of sodium propionate and 60 parts by weight of water can dissolve neither 10 parts of 1-(2-ethylhexyl)glycerol ether nor 10 parts of 1,2-octanediol.

### 4c) Potassium sorbate + diols

In example 4c, 10 g of 1-(2-ethyl hexyl) glycerol ether or of 1,2-octanediol, was added to an aqueous potassium sorbate solution in order to obtain solutions (Table 4c).

**Table 4c**

| | | | | | |
|---|---|---|---|---|---|
| Potassium sorbate | 45.0 | 30.0 | 20.0 | 15.0 | 10.0 |
| Fully demineralized water | 45.0 | 60.0 | 70.0 | 75.0 | 80.0 |
| 1-(2-ethyl hexyl) glycerol ether | 10.0 | 10.0 | 10.0 | 10.0 | 10.0 |
| Appearance of the solution after stirring during 3h | clear | clear | clear | 2 phases | 2 phases |
| Potassium sorbate | 45.0 | 30.0 | 20.0 | 10.0 | |
| Fully demineralized water | 45.0 | 60.0 | 70.0 | 80.0 | |
| 1-(2-ethylhexyl)-glycerol ether | | | | | |
| 1,2-octanediol | 10.0 | 10.0 | 10.0 | 10.0 | |
| Appearance of solution after stirring during 3 h | clear | clear | clear | 2 phases | |

The data show that a combination composed of 15 parts by weight of potassium sorbate and 75 parts by weight of water is not suitable as a solubilizer for medium-chain diols, while combinations of:
i) 20 parts by weight of potassium sorbate and 70 parts by weight of water,
ii) 30 parts by weight of potassium sorbate and 60 parts by weight of water, and
iii) 45 parts by weight of potassium sorbate and 45 parts by weight of water can dissolve 10 parts of 1-(2-ethylhexyloxy)glycerol ether or 10 parts of 1,2-octanediol.

### 4d) Sodium benzoate + diols

In example 4d, 10 g of 1-(2-ethyl hexyl) glycerol ether or of 1,2-octanediol was added to an aqueous sodium benzoate solution in order to obtain solutions (Table 4d).

**Table 4d**

| | | | | | |
|---|---|---|---|---|---|
| Sodium benzoate | 45.0 | 30.0 | 20.0 | 15.0 | 10.0 |
| Fully demineralized water | 45.0 | 60.0 | 70.0 | 75.0 | 80.0 |
| 1-(2-ethyl hexyl) glycerol ether | 10.0 | 10.0 | 10.0 | 10.0 | 10.0 |
| Appearance of solution after stirring during 3 h | clear | clear | clear | 2 phases | 2 phases |
| Sodium benzoate | 45.0 | 30.0 | 20.0 | 10.0 | |
| Fully demineralized water | 45.0 | 60.0 | 70.0 | 80.0 | |
| 1,2-octanediol | 10.0 | 10.0 | 10.0 | 10.0 | |
| Appearance of solution after stirring for 3 h | clear | clear | clear | 2 phases | |

The data in Table 4d show that a combination composed of 15 parts by weight of sodium benzoate and 75 parts by weight of water is not suitable as a solubilizer for medium-chain diols, while combinations of:
i) 20 parts by weight of sodium benzoate and 70 parts by weight of water,
ii) 30 parts by weight of sodium benzoate and 60 parts by weight of water, and
iii) 45 parts by weight of sodium benzoate and 45 parts by weight of water can dissolve 10 parts of 1-(2-ethyl hexyl) glycerol ether or 10 parts of 1,2-octanediol.

### 4e) Potassium sorbate and sodium benzoate (1/1) + diols

In example 4e, 10g of 1-(2-ethyl hexyl) glycerol ether or of 1,2-octanediol was added to aqueous mixtures of potassium sorbate with sodium benzoate (weight ratio 1/1) in order to obtain solutions (Table 4e)

**Table 4e**

| | | | | | |
|---|---|---|---|---|---|
| Potassium sorbate | 22.5 | 15.0 | 10.0 | 7.5 | 5.0 |
| Sodium benzoate | 22.5 | 15.0 | 10.0 | 7.5 | 5.0 |
| Fully demineralized water | 45.0 | 60.0 | 70.0 | 75.0 | 80.0 |
| 1-(2-ethylhexyl)-glycerol ether | 10.0 | 10.0 | 10.0 | 10.0 | 10.0 |
| Appearance of solution after stirring during 3 h | clear | clear | clear | 2 phases | 2 phases |
| Potassium sorbate | 22.5 | 15.0 | 10.0 | 5.0 | |
| Sodium benzoate | 22.5 | 15.0 | 10.0 | 5.0 | |
| Fully demineralized water | 45.0 | 60.0 | 70.0 | 80.0 | |
| 1,2-octanediol | 10.0 | 10.0 | 10.0 | 10.0 | |
| Appearance of solution after stirring during 3 h | clear | clear | clear | 2 phases | |

The data in Table 4e show that a combination composed of 7.5 parts by weight of potassium sorbate, 7.5 parts by weight of sodium benzoate, and 75 parts by weight of water is not suitable as a solubilizer for medium-chain diols, while combinations of i) 10 parts by weight of potassium sorbate, 10 parts by weight of sodium benzoate, and 70 parts by weight of water, ii) 15 parts by weight of potassium sorbate, 15 parts by weight of sodium benzoate, and 60 parts by weight of water, and iii) 22.5 parts by weight of potassium sorbate, 22.5 parts by weight of sodium benzoate, and 45 parts by weight of water can dissolve 10 parts of 1-(2-ethyl hexyl) glycerol ether or 10 parts of 1,2-octanediol.

### 5. Surface tension

The surface tension of mixtures of 90 parts of mixture A from example 1 with 10 parts of water or diols respectively was determined (Table 5):

**Table 5**

| | | | | | | |
|---|---|---|---|---|---|---|
| Mixture A | 90.0 | 90.0 | 90.0 | 90.0 | 90.0 | 90.0 |
| Water | 10.0 | | | | | |
| 1-(2-ethyl hexyl) glycerol ether | | 10.0 | | | | |
| 1,2-octanediol | | | 10.0 | | | |
| Mixture of 1-(2-ethyl hexyl) glycerol ether with 1,2-octanediol (weight ratio 3:7) | | | | 10.0 | | |
| Glycerol (85%) | | | | | 10.0 | |
| Propylene glycol | | | | | | 10.0 |
| Surface tension, 1% in water, mN/m | 71.9 | 35.6 | 44.7 | 41.3 | 72.2 | 72.3 |

| | | | | | | |
|---|---|---|---|---|---|---|
| (Control: fully demineralized water: 72.2 mN/m) | | | | | | |

Therefore, when
i) 10 parts of 1-(2-ethyl hexyl) glycerol ether,
ii) 10 parts of 1,2-octanediol, or
iii) 10 parts of the mixture of 1-(2-ethyl hexyl) glycerol ether and 1,2-octanediol (in a weight ratio of 3:7) are added to 90 parts of mixture A, instead of 10 parts of water, the surface tension (for an application concentration of 1% in water, which is typical for preservation) is significantly decreased, which improves moistening of wipe materials. On addition of glycerol or propylene glycol to mixture A, however, this advantageous effect is not observed.

### 6. Preservative test

### Concentrates tested

The following concentrates were produced (content given in wt%, Table 6a):

**Table 6a**

| **Component** | **I*** | **II** | **III** | **IV** | **V*** | **VI*** |
|---|---|---|---|---|---|---|
| Water | 55.00 | 45.00 | 45.00 | 45.00 | 45.00 | 45.00 |
| Potassium sorbate | 15.00 | 15.00 | 15.00 | 15.00 | 15.00 | 15.00 |
| Sodium benzoate | 30.00 | 30.00 | 30.00 | 30.00 | 30.00 | 30.00 |
| 1-(2-ethyl hexyl) glycerol ether | - | 10.00 | - | - | - | - |
| 1,2-octanediol | - | - | 10.00 | - | - | - |
| Mixture of 1-(2-ethyl hexyl) glycerol ether with 1,2-octanediol (weight ratio 3:7) | - | - | - | 10.00 | - | - |
| Glycerol (85%) | - | - | - | - | 10.00 | - |
| Propylene glycol | - | - | - | - | - | 10.00 |

| | | | | | | |
|---|---|---|---|---|---|---|
| *Control concentrates | | | | | | |

A polyethylene glycol-free emulsion for baby wipes was used as a test material. All of the samples were adjusted to a pH of 5.5. The results in the bacterial load test are shown in Table 6b.

**Table 6b**

| **Test material** | | **Sterility control** | **Inoculation cycles** | | |
|---|---|---|---|---|---|
| | | | 1 | 2 | 3 |
| 1 | PEG-free emulsion for baby wipes | - | +++ B, M, Y | +++ B, M, Y | / |
| 2 | + 0.50% I | - | ++ M, Y | ++ M, Y | +++ B Y |
| 3 | + 0.75% I | - | ++ M, Y | ++ M, Y | +++ B Y |
| 4 | + 1.00% I | - | + Y | - | - |
| 5 | + 0.50% II | - | +++ M, Y | +++ B, M, Y | / |
| 6 | + 0.75% II | - | - | - | - |
| 7 | + 1.00% II | - | - | - | - |
| 8 | + 0.50% III | - | ++ M, Y | +++ B, M, Y | +++ B, M, Y |
| 9 | + 0.75% III | - | + Y | ++ M, Y | - |
| 10 | + 1,00% III | - | - | - | - |
| 11 | + 0.50% IV | - | ++ M, Y | +++ B, M, Y | +++ B, M, Y |
| 12 | + 0.75% IV | - | ++ M, Y | ++ M, Y | + M |
| 13 | + 1.00% IV | - | - | - | - |
| 14 | + 0.50% V | - | ++ B, M, Y | +++ B, M, Y | +++ B, M, Y |
| 15 | + 0.75% V | - | ++ M, Y | ++ B, M, Y | +++ B Y |
| 16 | + 1.00% V | - | ++ Y | - | ++ Y |
| 17 | + 0.50% VI | - | ++ B, M, Y | +++ B, M, Y | +++ B, M, Y |
| 18 | + 0.75% VI | - | ++ M, Y | +++ B, M, Y | +++ B, M, Y |
| 19 | + 1.00% VI | - | ++ Y | + M | - |

As shown by the data in Table 6b, without preservatives, a polyethylene glycol-free emulsion for baby towelettes (baby wipes) has insufficient antimicrobial properties (cf. test 1 in Table 6b). Even if the control concentrate (composed of 15 wt% of potassium sorbate, 30 wt% of sodium benzoate, and 55 wt% of water, i.e. not containing diols) is added to this emulsion, it still has insufficient antimicrobial properties, even with an application concentration of 1 wt% of said control preservative concentrate (cf. tests 2 through 4). Control preservative concentrates V and VI (each composed of 45 wt% of water, 15 wt% of potassium sorbate, and 30 wt% of sodium benzoate, instead of the diol according to the invention, with 10 wt% of glycerol 85% in concentrate V and 10 wt% of propylene glycol in concentrate VI) also do not provide the emulsion with sufficient antimicrobial properties (cf. tests 14 through 19).

In contrast, concentrates II, III, and IV according to the invention (each composed of 45 wt% of water, 15 wt% of potassium sorbate, 30 wt% of sodium benzoate, and 10 wt% of the indicated), with an application concentration of 1 wt% in the emulsion, provide a favorable preservative effect (tests 5 through 13), with concentrate **II** according to the invention (with 1-(2-ethyl hexyl) glycerol ether as a diol) having a sufficient preservative effect even in a lower application concentration of 0.75% (test 6).

## Claims

1. Antimicrobial liquid concentrate, which comprises:
**a)** - From 5 weight% to 20 weight% of one or a plurality of diols selected from alkanediols having from six to twenty carbon atoms, and monoalkyl glycerol ethers having from four to eighteen carbon atoms;
**b)** - From 20 weight% to 60 weight% of one or a plurality of salts of one or a plurality of organic acids selected from the group composed of sorbic acid, benzoic acid, anisic acid, salicylic acid, 4-hydroxy benzoic acid, cinnamic acid, succinic acid, and levulinic acid, and optionally one or a plurality of the above-mentioned free acids, and,
**c)** - From 30 weight% to 70 weight% of water,
wherein the content of aromatic alcohol is a maximum of 5 weight% relative to the weight of the liquid concentrate.

2. Liquid concentrate according to claim 1, **characterized in that,** if it comprises said C₆ to C₂₀ alkanediol, said alkanediol is a C₆ to C₂₀ 1,2-alkanediol.

3. Liquid concentrate according to one of claim 1 or 2, **characterized in that,** if it comprises said C₆ to C₂₀ alkanediol, said alkanediol has eight to twelve carbon atoms.

4. Liquid concentrate according to claim 3, **characterized in that,** if it comprises said C₆ to C₂₀ alkanediol, said alkanediol 1,2-octanediol or 1,2-decanediol.

5. Liquid concentrate according to one of claim 1 to 4, **characterized in that** if it comprises said monoalkyl glycerol ethers having from four to eighteen carbon atoms, monoalkyl glycerol ether is a 1-(C₃ to C₁₈ monoalkyl) glycerol ether.

6. Liquid concentrate according to one of claim 1 to 5, **characterized in that** if it comprises said monoalkyl glycerol ethers having from four to eighteen carbon atoms, monoalkyl glycerol ether is 1-(2-ethyl hexyl) glycerol ether or 1-(dodecyl) glycerol ether.

7. Liquid concentrate according to one of claim 4, 5 or 6, **characterized in that** it comprises:
**a)** - From 5 wt% to 20 wt% of 1-(2-ethylhexyl) glycerol ether, 1,2-octanediol, or a mixture thereof;
**b)** - From 20 weight% to 60 weight% of one or a plurality of salts of one or a plurality of organic acids selected from the group composed of sorbic acid, benzoic acid, anisic acid, salicylic acid, 4-hydroxy benzoic acid, cinnamic acid, succinic acid, and levulinic acid, and optionally one or a plurality of the above-mentioned free acids, and,
**c)** - From 30 weight% to 70 weight% of water,
wherein the content of aromatic alcohol is a maximum of 5 weight% relative to the weight of the liquid concentrate.

8. Liquid concentrate according to claim 7, **characterized in that** if it comprises a mixture of 1-(2-ethylhexyl) glycerol ether and of 1,2-octanediol, the weight ratio 1-(2-ethylhexyl)-glycerol ether/1,2-octanediol is in the range of 10/1 to 1/10.

9. Liquid concentrate according to one of claim 1 to 8, **characterized in that** it comprises:
**a)** - From 5 weight% to 20 weight% of one or a plurality of diols selected from alkanediols having from six to twenty carbon atoms, and monoalkyl glycerol ethers having from four to eighteen carbon atoms;
**b)** - From 20 weight% to 60 weight% of potassium salt or sodium salt of benzoic acid or of sorbic acid or of a mixture thereof, and optionally one or a plurality of the above-mentioned free acids, and,
**c)** - From 30 weight% to 70 weight% of water,
wherein the content of aromatic alcohol is a maximum of 5 weight% relative to the weight of the liquid concentrate.

10. Liquid concentrate according to claim 9, **characterized in that** it comprises:
**a)** - From 5 wt% to 20 wt% of 1-(2-ethylhexyl) glycerol ether, 1,2-octanediol, or a mixture thereof;
**b)** - From 20 weight% to 60 weight% of potassium sorbate, of sodium benzoate, or of a mixture of potassium sorbate with sodium benzoate, and optionally one or a plurality of the above-mentioned free acids, and,
**c)** - From 30 weight% to 70 weight% of water,
wherein the content of aromatic alcohol is a maximum of 5 weight% relative to the weight of the liquid concentrate.

11. Liquid concentrate according to one of claim 1 to 10, **characterized in that** said concentrate is free of propanediol-1,3.

12. Liquid concentrate according to one of claim 1 to 11, **characterized in that** said concentrate is free of C₂ to C₅ diols.

13. Liquid concentrate according to one of claims 1 to 12, **characterized in that** it consists of:
**a)** - From 5 wt% to 15 wt% of 1-(2-ethylhexyl) glycerol ether, 1,2-octanediol, or a mixture thereof wherein the weight ratio 1-(2-ethylhexyl)-glycerol ether/1,2-octanediol is from 5/1 to 1/1;
**b)** - From 35 weight% to 50 weight% of a mixture of potassium sorbate with sodium benzoate and,
**c)** - From 35 weight% to 50 weight% of water,
in which the sum of the weight proportions of components a) b) and c) is equal to 100 wt%.

14. Use of the liquid concentrate according to one of claim 1 to 13, for preservation of cosmetic products, household products, and technical products.

15. Use according to claim 14, **characterized in that** the cosmetic product is a wet wipe.

## Patentansprüche

1. Antimikrobielles Flüssigkonzentrat, das umfasst:
a) - von 5 Gew.-% bis 20 Gew.-% eines oder einer Vielzahl von Diolen, die ausgewählt sind aus Alkandiolen, die von sechs bis zwanzig Kohlenstoffatome aufweisen, und Monoalkylglycerinethern, die von vier bis achtzehn Kohlenstoffatomen aufweisen;
b) - von 20 Gew.-% bis 60 Gew.-% eines oder einer Vielzahl von Salzen einer oder einer Vielzahl von organischen Säuren, die ausgewählt sind aus der Gruppe, bestehend aus Sorbinsäure, Benzoesäure, Anissäure, Salicylsäure, 4-Hydroxybenzoesäure, Zimtsäure, Bernsteinsäure und Lävulinsäure, und optional einer oder einer Vielzahl von den oben genannten freien Säuren, und,
c) - von 30 Gew.-% bis 70 Gew.-% Wasser,
worin der Gehalt an aromatischem Alkohol maximal 5 Gew.-%, bezogen auf das Gewicht des Flüssigkonzentrats, beträgt.

2. Flüssigkonzentrat nach Anspruch 1, **dadurch gekennzeichnet, dass**, wenn es das C₆- bis C₂₀-Alkandiol umfasst, das Alkandiol ein C₆- bis C₂₀ 1,2-Alkandiol ist.

3. Flüssigkonzentrat nach einem der Ansprüche 1 oder 2, **dadurch gekennzeichnet, dass**, wenn es das C₆- bis C₂₀-Alkandiol umfasst, das Alkandiol acht bis zwölf Kohlenstoffatome aufweist.

4. Flüssigkonzentrat nach Anspruch 3, **dadurch gekennzeichnet, dass**, wenn es das C₆-bis C₂₀-Alkandiol umfasst, das Alkandiol 1,2-Octandiol oder 1,2-Decandiol ist.

5. Flüssigkonzentrat nach einem der Ansprüche 1 bis 4, **dadurch gekennzeichnet, dass**, wenn es die Monoalkylglycerinether, die von vier bis achtzehn Kohlenstoffatomen aufweisen, umfasst, der Monoalkylglycerinether ein 1-(C₃- bis C₁₈-Monoalkyl)glycerinether ist.

6. Flüssigkonzentrat nach einem der Ansprüche 1 bis 5, **dadurch gekennzeichnet, dass**, wenn es die Monoalkylglycerinether, die von vier bis achtzehn Kohlenstoffatomen aufweisen, umfasst, der Monoalkylglycerinether 1-(2-Ethylhexyl)glycerinether oder 1-(Dodecyl)glycerinether ist.

7. Flüssigkonzentrat nach einem der Ansprüche 4, 5 oder 6, **dadurch gekennzeichnet, dass** es umfasst:
a) - von 5 Gew.-% bis 20 Gew.-% 1-(2-Ethylhexyl)glycerinether, 1,2-Octandiol oder einer Mischung davon;
b) - von 20 Gew.-% bis 60 Gew.-% eines oder einer Vielzahl von Salzen einer oder einer Vielzahl von organischer Säuren, die ausgewählt sind aus der Gruppe, bestehend aus Sorbinsäure, Benzoesäure, Anissäure, Salicylsäure, 4-Hydroxybenzoesäure, Zimtsäure, Bernsteinsäure und Lävulinsäure, und optional einer oder einer Vielzahl von den oben genannten freien Säuren, und,
c) - von 30 Gew.-% bis 70 Gew.-% Wasser,
worin der Gehalt an aromatischem Alkohol maximal 5 Gew.-%, bezogen auf das Gewicht des Flüssigkonzentrats, beträgt.

8. Flüssigkonzentrat nach Anspruch 7, **dadurch gekennzeichnet, dass**, wenn es eine Mischung aus 1-(2-Ethylhexyl)glycerinether und aus 1,2-Octandiol enthält, das Gewichtsverhältnis 1-(2-Ethylhexyl)glycerinether/1,2-Octandiol im Bereich von 10/1 bis 1/10 liegt.

9. Flüssigkonzentrat nach einem der Ansprüche 1 bis 8, **dadurch gekennzeichnet, dass** es umfasst:
a) - von 5 Gew.-% bis 20 Gew.-% eines oder einer Vielzahl von Diolen, ausgewählt aus Alkandiolen, die von sechs bis zwanzig Kohlenstoffatomen aufweisen, und Monoalkylglycerinethern, die von vier bis achtzehn Kohlenstoffatome aufweisen;
b)-von 20 Gew.-% bis 60 Gew.-% eines Kaliumsalzes oder Natriumsalzes der Benzoesäure oder der Sorbinsäure oder einer Mischung davon, und optional einer oder einer Vielzahl von den oben genannten freien Säuren, und,
c) - von 30 Gew.-% bis 70 Gew.-% Wasser,
worin der Gehalt an aromatischem Alkohol maximal 5 Gew.-%, bezogen auf das Gewicht des Flüssigkonzentrats, beträgt.

10. Flüssigkonzentrat nach Anspruch 9, **dadurch gekennzeichnet, dass** es umfasst:
a) - von 5 Gew.-% bis 20 Gew.-% 1-(2-Ethylhexyl)glycerinether, 1,2-Octandiol oder einer Mischung davon;
b) - von 20 Gew.-% bis 60 Gew.-% Kaliumsorbat, Natriumbenzoat, oder einer Mischung von Kaliumsorbat mit Natriumbenzoat und optional einer oder einer Vielzahl von den oben genannten freien Säuren, und,
c) - von 30 Gew.-% bis 70 Gew.-% Wasser,
worin der Gehalt an aromatischem Alkohol maximal 5 Gew.-%, bezogen auf das Gewicht des Flüssigkonzentrats, beträgt.

11. Flüssigkonzentrat nach einem der Ansprüche 1 bis 10, **dadurch gekennzeichnet, dass** das Konzentrat frei von Propandiol-1,3 ist.

12. Flüssigkonzentrat nach einem der Ansprüche 1 bis 11, **dadurch gekennzeichnet, dass** das Konzentrat frei von C₂- bis C₅-Diolen ist.

13. Flüssigkonzentrat nach einem der Ansprüche 1 bis 12, **dadurch gekennzeichnet, dass** es besteht aus:
a) -von 5 Gew.-% bis 15 Gew.-% 1-(2-Ethylhexyl)-glycerinether, 1,2-Octandiol oder einer Mischung davon, worin das Gewichtsverhältnis 1-(2-Ethylhexyl)glycerinether/1,2-Octandiol von 5/1 bis 1/1 beträgt;
b) - von 35 Gew.-% bis 50 Gew.-% einer Mischung aus Kaliumsorbat mit Natriumbenzoat und,
c) - von 35 Gew.-% bis 50 Gew.-% Wasser,
worin die Summe der Gewichtsanteile der Komponenten a) b) und c) gleich 100 Gew.-% ist.

14. Verwendung des Flüssigkonzentrat nach einem der Ansprüche 1 bis 13 zur Konservierung von kosmetischen Produkten, Haushaltsprodukten und technischen Produkten.

15. Verwendung nach Anspruch 14, **dadurch gekennzeichnet, dass** das kosmetische Produkt ein Feuchttuch ist.

## Revendications

1. Concentré liquide antimicrobien, qui comprend :
a) de 5 % en poids à 20 % en poids d'un ou d'une pluralité de diols sélectionnés parmi des alcanediols ayant de 6 à 20 atomes de carbone, et des éthers de monoalkyl glycérol ayant de 4 à 18 atomes de carbone ;
b) de 20 % en poids à 60 % en poids d'un ou d'une pluralité de sels d'un ou d'une pluralité d'acides organiques sélectionnés dans le groupe composé de l'acide sorbique, de l'acide benzoïque, de l'acide anisique, de l'acide salicylique, de l'acide 4-hydroxy benzoïque, de l'acide cinnamique, de l'acide succinique, et de l'acide lévulinique, et facultativement d'un ou d'une pluralité des acides libres susmentionnés, et,
c) de 30 % en poids à 70 % en poids d'eau,
dans lequel la teneur en alcool aromatique est un maximum de 5 % en poids par rapport au poids du concentré liquide.

2. Concentré liquide selon la revendication 1, **caractérisé en ce que**, s'il comprend ledit alcanediol en C₆ à C₂₀, ledit alcanediol est un 1,2-alcanediol en C₆ à C₂₀.

3. Concentré liquide selon l'une de la revendication 1 ou 2, **caractérisé en ce que**, s'il comprend ledit alcanediol en C₆ à C₂₀, ledit alcanediol à de 8 à 12 atomes de carbone.

4. Concentré liquide selon la revendication 3, **caractérisé en ce que**, s'il comprend ledit alcanediol en C₆ à C₂₀, ledit alcanediol est le 1,2-octanediol ou le 1,2-décanediol.

5. Concentré liquide selon l'une des revendications 1 à 4, **caractérisé en ce que** s'il comprend lesdits éthers de monoalkyl glycérol ayant de 4 à 18 atomes de carbone, l'éther de monoalkyl glycérol est un éther de 1-(monoalkyl en C₃ à C₁₈) glycérol.

6. Concentré liquide selon l'une des revendications 1 à 5, **caractérisé en ce que** s'il comprend lesdits éthers de monoalkyl glycérol ayant de 4 à 18 atomes de carbone, l'éther de monoalkyl glycérol est l'éther de 1-(2-éthyl hexyl) glycérol ou l'éther de 1-(dodécyl)glycérol.

7. Concentré liquide selon l'une des revendications 4, 5 ou 6, **caractérisé en ce qu'**il comprend :
a) de 5 % en poids à 20 % en poids d'éther de 1-(2-éthylhexyl)glycérol, de 1,2-octanediol, ou d'un mélange de ceux-ci;
b) de 20 % en poids à 60 % en poids d'un ou d'une pluralité de sels d'un ou d'une pluralité d'acides organiques sélectionnés dans le groupe composé de l'acide sorbique, de l'acide benzoïque, de l'acide anisique, de l'acide salicylique, de l'acide 4-hydroxy benzoïque, de l'acide cinnamique, de l'acide succinique, et de l'acide lévulinique, et facultativement d'un ou d'une pluralité des acides libres susmentionnés, et,
c) de 30 % en poids à 70 % en poids d'eau,
dans lequel la teneur en alcool aromatique est d'un maximum de 5 % en poids par rapport au poids du concentré liquide.

8. Concentré liquide selon la revendication 7, **caractérisé en ce que** s'il comprend un mélange d'éther de 1-(2-éthylhexyl)glycérol et de 1,2-octanediol, le rapport en poids d'éther de 1-(2-éthylhexyl)-glycérol/1,2-octanediol se trouve dans la plage de 10/1 à 1/10.

9. Concentré liquide selon l'une des revendications 1 à 8, **caractérisé en ce qu'**il comprend :
a) de 5 % en poids à 20 % en poids d'un ou d'une pluralité de diols sélectionnés parmi des alcanediols ayant de 6 à 20 atomes de carbone, et des éthers de monoalkyl glycérol ayant de 4 à 18 atomes de carbone ;
b) de 20 % en poids à 60 % en poids d'un sel de potassium ou d'un sel de sodium d'acide benzoïque ou d'acide sorbique ou d'un mélange de ceux-ci, et facultativement d'un ou d'une pluralité des acides libres susmentionnés, et,
c) de 30 % en poids à 70 % en poids d'eau,
dans lequel la teneur en alcool aromatique est d'un maximum de 5 % en poids par rapport au poids du concentré liquide.

10. Concentré liquide selon la revendication 9 **caractérisé en ce qu'**il comprend :
a) de 5 % en poids à 20 % en poids d'éther de 1-(2-éthylhexyl)glycérol, de 1,2-octanediol, ou d'un mélange de ceux-ci;
b) de 20 % en poids à 60 % en poids de sorbate de potassium, de benzoate de sodium, ou d'un mélange de sorbate de potassium avec du benzoate de sodium, et facultativement d'un ou d'une pluralité des acides libres susmentionnés, et,
c) de 30 % en poids à 70 % en poids d'eau,
dans lequel la teneur en alcool aromatique est d'un maximum de 5 % en poids par rapport au poids du concentré liquide.

11. Concentré liquide selon l'une des revendications 1 à 10, **caractérisé en ce que** ledit concentré est dépourvu de propanediol-1,3.

12. Concentré liquide selon l'une des revendications 1 à 11, **caractérisé en ce que** ledit concentré est dépourvu de diols en C₂ à C₅.

13. Concentré liquide selon l'une des revendications 1 à 12, **caractérisé en ce qu'**il consiste en :
a) de 5 % en poids à 15 % en poids d'éther de 1-(2-éthylhexyl)glycérol, de 1,2-octanediol, ou d'un mélange de ceux-ci dans lequel le rapport en poids d'éther de 1-(2-éthylhexyl)-glycérol/1,2-octanediol est de 5/1 à 1/1;
b) de 35 % en poids à 50 % en poids d'un mélange de sorbate de potassium avec du benzoate de sodium et,
c) de 35 % en poids à 50 % en poids d'eau,
dans lequel la somme des proportions en poids des composants a), b) et c) est égale à 100 % en poids.

14. Utilisation du concentré liquide selon l'une des revendications 1 à 13 pour la conservation de produits cosmétiques, de produits ménagers, et de produits techniques.

15. Utilisation selon la revendication 14, **caractérisée en ce que** le produit cosmétique est une lingette humide.
